# DEMANDE DE BREVET EUROPEEN

(11) **EP 0 760 454 A1**
(43) Date de publication de la demande: **05.03.1997**
(21) Numéro de dépôt: 96401821.2
(22) Date de dépôt: 26.08.1996
(51) Int. Cl.: F24H 1/10, F16L 39/00, H05B 3/82

(54) **Elément de connexion pour échangeur électrique annulaire**

(30) Priorité: 28.08.1995 FR 9510134
(71) Demandeur: ELECTRICITE DE FRANCE Service National, F-75008 Paris (FR)
(72) Inventeur: Creton, Bernard, 77940 Montmachoux (FR); Gorse, Michel, 77810 Thomery (FR)
(74) Mandataire: Dubois-Chabert, Guy

(57) **Abrégé**

L'élément de connexion (10) permet de positionner et de connecter électriquement deux canalisations (1, 2) entre elles, dans le cadre d'un dispositif échangeur de chaleur.

Il se loge dans une bride (7) de la canalisation externe (1) et possède des lumières radiales (11) pour laisser passer le liquide visqueux. Il possède également un trou central permettant de recevoir une extrémité de la canalisation interne (2). Des connecteurs cylindriques à lamelles sont placés dans des rainures extérieure (20) et intérieure (19).

Application aux échangeurs électriques de chaleur dans l'industrie agro-alimentaire, par exemple pour la pasteurisation et la stérilisation des produits visqueux.

## Description

### Domaine de l'invention

L'invention concerne le chauffage des fluides visqueux circulant dans un espace annulaire chauffé par effet Joule. Une application spéciale est prévue pour le chauffage, la pasteurisation et la stérilisation de certains produits agro-alimentaires.

### Art antérieur et problème posé

Dans de nombreux procédés industriels, on est amené à chauffer des fluides divers. La plupart de ceux-ci sont mauvais conducteurs de la chaleur. Les méthodes de chauffage de tels fluides utilisent en général des échangeurs tubulaires, des échangeurs à plaques ou l'injection de vapeur.

Ces fluides visqueux sont souvent de très mauvais conducteurs de la chaleur, très visqueux, thermosensibles et ont un comportement thermorhéologique complexe, en particulier les fluides dits "non newtoniens". Le transfert thermique entre la paroi chaude du tube et le fluide est très difficile. En raison de la faible conductivité thermique de ces fluides visqueux, la chaleur est donc difficilement transmissible au centre de la section du tube lorsqu'il s'agit d'échangeurs de chaleur tubulaires. Ainsi, pour une section donnée, le profil thermique en régime établi a une allure parabolique. Près de la paroi, le fluide visqueux a une température voisine de celle de la paroi. Par contre, au coeur de l'écoulement, la température peut être inférieure de plusieurs dizaines de degrés.

Dans le but de remédier à cette hétérogénéité de température, on utilise des dispositifs échangeurs électriques de chaleur, annulaires, c'est-à-dire utilisant deux canalisations concentriques entre lesquelles le fluide visqueux est introduit et chauffé par son contact avec les parois de ces deux canalisations. Un tel dispositif est décrit par la demande de brevet français publiée avec le numéro FR-A-2 708 726 et par la figure 1. La surface d'échange est composée de plusieurs tronçons comprenant chacun une canalisation interne 2 et une canalisation externe 1. Elles sont parcourues par un courant électrique qui est de l'ordre de quelques centaines d'Ampères. L'amenée du courant se fait par une plaque de connexion 4 soudée sur la canalisation externe 1. La liaison électrique avec la canalisation interne 2 qui doit être au même potentiel est réalisée avec un connecteur fixe 21 soudé sur les deux canalisations 1 et 2, à chaque extrémité. Le produit à traiter circule dans l'espace annulaire entre la canalisation externe 1 et la canalisation interne 2, puis traverse le connecteur pour passer d'un tronçon à un autre par l'intermédiaire d'un coude 3 à 180°.

Or, on éprouve le besoin d'assurer des nettoyages relativement fréquents, notamment dans les unités de production de l'industrie agro-alimentaire. La conception des connecteurs actuels, utilisant des soudures à leurs connexions, ne permet pas de démonter ces éléments de connexion des deux canalisations. L'invention vise à remédier à cet inconvénient.

### Résumé de l'invention

A cet effet, un premier objet de l'invention est un élément de connexion pour un échangeur électrique annulaire, destiné à assurer le positionnement relatif et le contact électrique intime de deux canalisations concentriques, une canalisation intérieure et une canalisation extérieure, l'élément de connexion étant constitué d'une bague comprenant :
- un trou central cylindrique à l'intérieur duquel doit être positionnée une extrémité de la canalisation interne ;
- une surface externe cylindrique autour de laquelle doit être positionnée une extrémité de la canalisation externe ;
la surface cylindrique interne du trou central et la surface cylindrique externe possédant chacune une rainure annulaire de profondeur limitée et déterminée dans laquelle est placé un connecteur cylindrique à lamelles dont l'épaisseur est juste supérieure à la profondeur des rainures. Ceci permet d'assurer un contact électrique intime entre les différents éléments.

De préférence, la rainure a une forme en queue d'aronde, pour permettre le maintien aisé du connecteur à lamelles qu'elle reçoit.

Dans sa réalisation préférentielle, pour les échangeurs ou appareils de traitements des produits visqueux agro-alimentaires, des lumières axiales sont prévues parallèlement à l'axe du trou central pour permettre le passage d'un fluide qui circule entre les deux canalisations vers un autre assemblage de deux autres canalisations concentriques.

Un deuxième objet principal de l'invention est un dispositif échangeur de chaleur électrique d'un fluide visqueux par un tronçon de deux canalisations concentriques déterminant une section annulaire, comprenant :
- une canalisation interne ;
- une canalisation externe entourant la canalisation interne ;
- des moyens de positionnement des deux canalisations interne et externe ; et
- des moyens de chauffage électrique des deux canalisations interne et externe ; et
- des moyens de chauffage électrique des deux canalisations interne et externe comprenant, en outre, des éléments de connexion électrique.

Selon l'invention, les moyens de maintien et les moyens de connexion sont réalisés sous la forme d'un élément de connexion tel qu'il vient d'être décrit.

De préférence, les moyens de positionnement comprennent :
- une bride à laquelle est soudée la canalisation externe et sur une surface intérieure de laquelle est prévue une cavité destinée à recevoir l'élément de connexion par sa surface extérieure ; et
- une contre-bride placée contre la bride pour maintenir à sa place l'élément de connexion et ayant un orifice central pour assurer le passage du liquide.

### Liste des figures

L'invention et ses différentes caractéristiques techniques seront mieux comprises à la lecture de la description suivante, accompagnée de trois figures représentant respectivement :

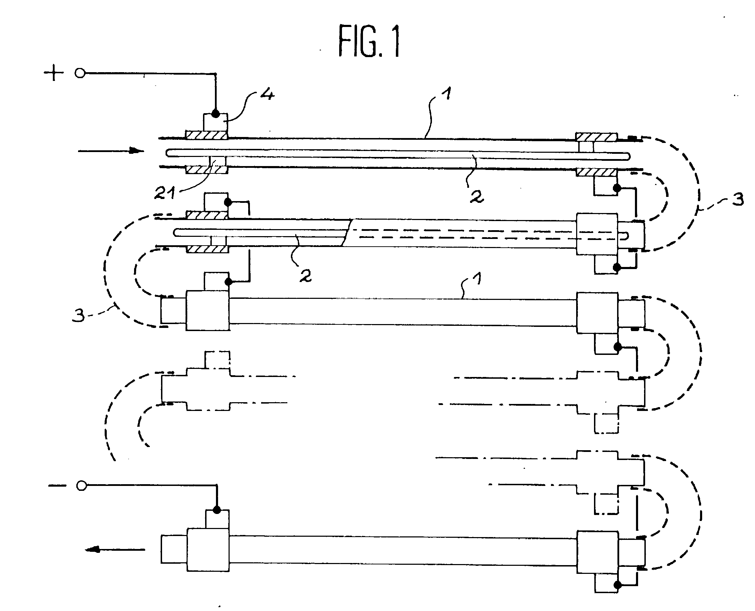

- figure 1, déjà décrite, un dispositif échangeur de chaleur électrique annulaire, selon l'art antérieur ;
- figure 2, en coupe longitudinale, l'élément de connexion selon l'invention, placé sur un échangeur électrique annulaire selon l'invention ; et
- figure 3, en coupe cavalière, l'élément de connexion selon l'invention.

### Description détaillée d'une réalisation de l'invention

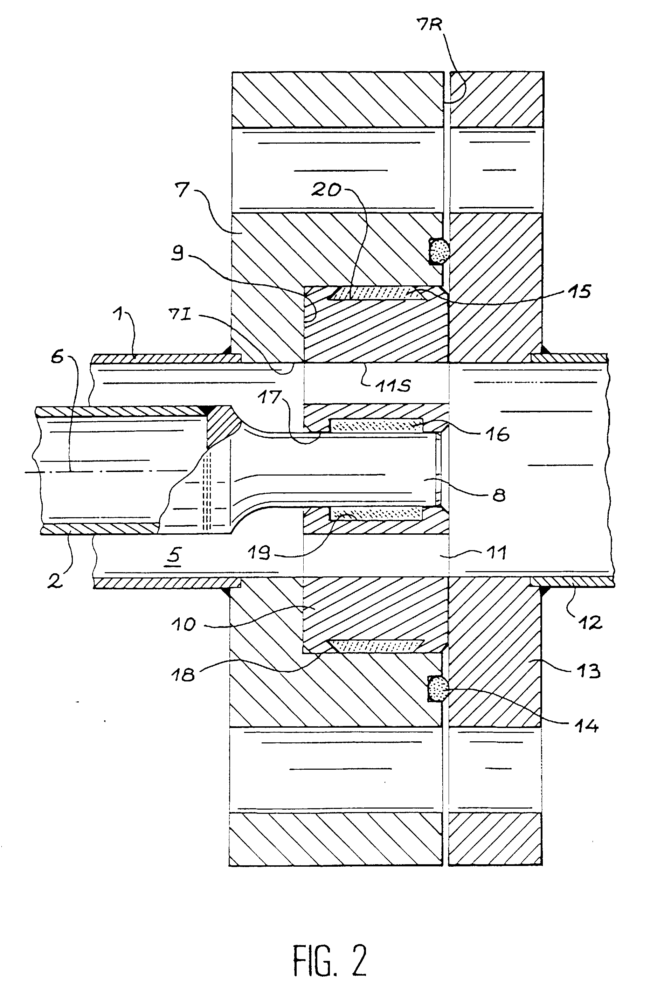

Sur la figure 2, on retrouve la canalisation externe 1, la canalisation interne 2 délimitant la section annulaire 5 dans laquelle les fluides visqueux doivent circuler pour être chauffés. On note que, dans cette réalisation, les extrémités respectives des canalisations externe 1 et interne 2 sont réalisées avec des pièces spéciales, telles qu'une bride 7 et un manchon 8. La bride 7 est soudée à une extrémité de la canalisation externe 1, tandis que le manchon 8 est soudé à une extrémité de la canalisation interne 2. La bride 7 possède un trou central défini par une surface interne 7I dont le diamètre correspond au diamètre interne de la canalisation externe 1. De son côté, le manchon 8 a un diamètre peu important, c'est-à-dire légèrement inférieur au diamètre externe de la canalisation interne 2.

L'élément de connexion 10, objet principal de l'invention, est en contact électrique intime avec ces deux éléments 7 et 8. Il est logé dans une cavité 9 de la bride 7, cette cavité 9 débouchant sur la surface radiale 7R opposée à l'extrémité de la canalisation externe 1. L'élément de connexion 10 possède de préférence des lumières 11 parallèles à l'axe 6 qui est également l'axe longitudinal des deux canalisations externe 1 et interne 2. Ainsi, comme on le voit sur cette figure 2, la continuité de l'espace annulaire 5 se prolonge au niveau de l'élément de connexion 10 pour être éventuellement également prolongée dans une canalisation aval, référencée 12, mais ne possédant pas de canalisation interne.

On utilise une contre-bride 13 placée radialement contre la bride 7 pour bloquer en translation le long de l'axe longitudinal 6 l'élément de connexion 10. Le diamètre interne de cette contre-bride 13 est égal au diamètre défini par la surface interne 11S des lumières 11, de manière à prolonger également le diamètre défini par cette surface 11S interne à des lumières 11, jusqu'à un point de fixation par soudure à la canalisation aval 12. Un joint 14 peut compléter cet assemblage s'il est placé radialement entre la bride 7 et la contre-bride 13.

La connexion électrique entre l'élément de connexion 10 et la bride 7 se fait au moyen d'un connecteur cylindrique unipolaire à lamelles, tel que ceux commercialisés par la Compagnie MULTI-CONTACT FRANCE S. A. Il se présente sous la forme d'une bande métallique fine, percée d'interstices inclinés par rapport à la direction longitudinale de cette lame, à la manière d'une persienne. De cette manière, un tel connecteur à lamelles présente donc une élasticité par rapport à son épaisseur qui peut être exploitée pour assurer un contact ferme et maximal entre les deux pièces à connecter et entre lesquelles il est placé. Un connecteur de cette sorte, référencé 15, est placé dans une cavité externe annulaire 20 sur la surface externe 18 de l'élément de connexion 10. Cette cavité est de préférence en forme de queue d'aronde pour faciliter le maintien du connecteur à lamelles.

De manière analogue, sur la surface interne centrale 17 du trou central de l'élément de connexion 10 se trouve une cavité annulaire interne 19 destinée à recevoir également un connecteur à lamelle 16. La profondeur des cavités 19 et 20 est très légèrement inférieure à l'épaisseur des connecteurs à lamelles 15 et 16 lorsqu'ils sont au repos, c'est-à-dire sans contrainte. De cette manière, lorsqu'ils sont montés dans leurs cavités respectives, les lamelles sont légèrement écrasées et assurent un contact électrique intime entre les deux pièces entre lesquelles elles sont pressées.

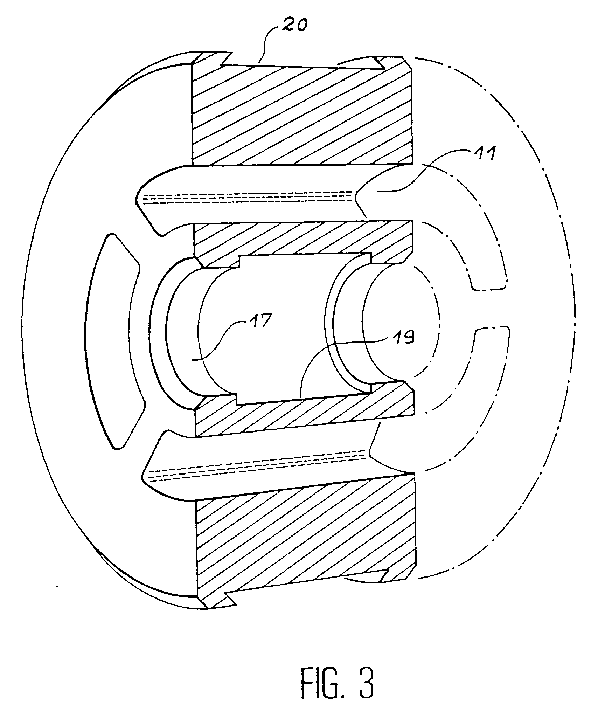

En référence à la figure 3, l'élément de connexion 10 est représenté en détail. On y retrouve la cavité externe 20 en forme de queue d'aronde, la cavité interne 19 qui est représentée en forme rectangulaire, les lumières 11 ont également été représentées. Dans la réalisation préférentielle, on dispose trois lumières radiales 11, mais ce nombre n'est aucunement limitatif. On comprend ainsi que cet élément de connexion 10 assure à la fois le positionnement des canalisations externe 1 et interne 2 l'une par rapport à l'autre. Bien entendu, l'élément de connexion 10 assure également le contact électrique intime entre ces deux canalisations.

Ainsi, l'échangeur utilisant un tel élément de connexion peut être démonté au niveau de ses connexions entre les deux canalisations 1 et 2. On peut ainsi assurer un nettoyage efficace, ceci étant très utile dans les unités de production de l'industrie agro-alimentaire. Le fait que l'élément de connexion cylindrique 10 soit démontable permet de concevoir des tronçons d'échangeurs dont la canalisation interne peut être facilement retirée par rapport à la canalisation externe.

On note également que le l'élément de connexion 10 est réalisé sous la forme d'une seule pièce, mis à part les connecteurs à lamelles 15 et 16. Il permet donc d'assurer une très bonne liaison électrique grâce à ces derniers. Il permet également d'absorber les dilatations thermiques entre les différentes pièces, sans nuire à la qualité du contact.

## Revendications

1. Elément de connexion cylindrique (10) pour échangeur électrique annulaire destiné à assurer le positionnement relatif et le contact électrique intime entre deux canalisations concentriques, c'est-à-dire une canalisation externe (1) et une canalisation interne (2), l'élément de connexion (10) étant constitué d'une bague cylindrique comprenant :
- un trou central cylindrique à l'intérieur duquel doit être positionnée une extrémité de la canalisation interne (2) ; et
- une surface externe cylindrique (18) cylindrique, autour de laquelle doit être positionnée la canalisation externe (1),
la surface cylindrique interne (17) du trou central et la surface externe cylindrique (18) possèdent chacune une rainure annulaire (19, 20) de profondeur limitée et déterminée et dans lesquelles sont placés des connecteurs cylindriques à lamelles (15, 16) et dont l'épaisseur est juste supérieure à la profondeur des rainures (19, 20).

2. Elément de connexion selon la revendication 1, caractérisé en ce que la rainure externe (9) a une forme en queue d'aronde.

3. Elément de connexion selon la revendication 1, caractérisé en ce qu'il comprend des lumières axiales (11), parallèles à l'axe (6) du trou central, pour permettre le passage d'un fluide qui circule entre les deux canalisations (1, 2) vers un autre assemblage de deux autres canalisations concentriques.

4. Dispositif échangeur électrique de chaleur pour un fluide visqueux par passage dans un tronçon de deux canalisations concentriques (1, 2) de section annulaire, comprenant :
- une canalisation interne (2) ;
- une canalisation externe (1) entourant la canalisation interne (2) ;
- des moyens de positionnement entre les deux canalisations interne (2) et externe (1) ; et
- des moyens de chauffage électrique des deux canalisations (1, 2) comprenant, en outre, des éléments de connexion électrique,
caractérisé en ce que les moyens de positionnement et les moyens de connexion électriques sont réalisés sous la forme d'un élément de connexion (10) selon la revendication 3.

5. Dispositif échangeur électrique de chaleur selon la revendication 4, caractérisé en ce que les moyens de positionnement comprennent :
- une bride (7) à laquelle est soudée la canalisation externe (1) et sur une surface intérieure (7I) de laquelle est prévue une cavité (9) destinée à recevoir l'élément de connexion (10) ; et
- une contre-bride (13) placée contre la bride (7) pour maintenir en place l'élément de connexion (10) et ayant un orifice central pour assurer le passage du liquide.
